Europäisches Patentamt

European Patent Office

Office européen des brevets

(19)

(11) Veröffentlichungsnummer: **0 089 494**
**B1**

(12) # EUROPÄISCHE PATENTSCHRIFT

(45) Veröffentlichungstag der Patentschrift:
03.09.86

(21) Anmeldenummer: 83101597.9

(22) Anmeldetag: 19.02.83

(51) Int. Cl.⁴: **B 29 C 59/02,** B 29 C 55/18

(54) **Verfahren und Vorrichtung zum Anbringen eines Prägefolien-Abdruckes auf einer flexiblen Materialbahn.**

(30) Priorität: 23.03.82 DE 3210551

(43) Veröffentlichungstag der Anmeldung:
28.09.83 Patentblatt 83/39

(45) Bekanntmachung des Hinweises auf die Patenterteilung:
03.09.86 Patentblatt 86/36

(84) Benannte Vertragsstaaten:
AT BE CH FR GB IT LI LU NL SE

(56) Entgegenhaltungen:
DE-A-2 004 564
DE-C-943 379
DE-U-1 965 415
GB-A-861 061
US-A-2 594 290

(73) Patentinhaber: Firma LEONHARD KURZ,
Schwabacher Strasse 482, D-8510 Fürth/Bayern
(DE)

(72) Erfinder: Mitsam, Reinwald, Freiheitstrasse 29,
D-8502 Zirndorf (DE)

(74) Vertreter: LOUIS, PÖHLAU, LOHRENTZ &
SEGETH, Kesslerplatz 1 P.B. 3055, D-8500
Nürnberg (DE)

EP 0 089 494 B1

## Beschreibung

Die Erfindung betrifft ein Verfahren zum Anbringen eines Prägefolien-Abdruckes auf einer flexiblen, vorzugsweise bandförmigen Materialbahn, wobei eine bandförmige Heißprägefolie unter gleichzeitiger Erwärmung mittels wenigstens einem Rollendruck gegen die an einem erhitzten Stützkörper anliegende Materialbahn gepresst und nach dem Anpressen und Abkühlen die Trägerbahn der Heißprägefolie von deren auf der Materialbahn verbleibender Dekorschicht abgezogen wird. Weiterhin hat die Erfindung eine Vorrichtung zur Durchführung dieses Verfahrens zum Gegenstand, welche eine als Stützkörper dienende, beheizte Prägewalze und eine an der Oberfläche der Prägewalze anlegbare Druckrolleneinrichtung aufweist.

Es ist bereits bekannt, bandförmige Materialbahnen mit Heißprägefolien zu dekorieren. Dabei geht man im allgemeinen so vor, daß die Materialbahn gemeinsam mit der Prägefolie durch einen Schlitz zwischen einer beheizten Rolle und einer Andruckrolle hindurchgeführt wird, d.h. man wendet im Prinzip ein Kalanderverfahren an. Dieses Vorgehen hat etliche Mängel. Zum einen sind die erzielbaren Arbeitsgeschwindigkeiten sehr niedrig, weil ja eine gewisse Einwirkungszeit der Wärme auf die Prägefolie und die zu dekorierende Materialbahn erforderlich ist, um eine einwandfreie Verbindung zu erreichen. Zum anderen besteht die Gefahr, daß die Beprägung mangelhaft ausfällt, da die Hitze- und Druckeinwirkung ja jeweils nur in einem kleinen, gleichsam linienförmigen Bereich erfolgt. Erhöht man die Temperatur der Prägewalze, muß damit gerechnet werden, daß entweder die zu dekorierende Materialbahn oder die Prägefolie beschädigt werden. Hier sind also dem Einsatz des bekannten Verfahrens relativ enge Grenzen gesetzt.

Es wurde auch bereits versucht, eine Verbesserung dadurch zu erreichen, daß man die zu dekorierende Materialbahn mit der Prägefolie nacheinander durch mehrere, jeweils von einer beheizten Walze und einer Andruckwalze gebildete Spalte führte. Auch hier ließ sich jedoch kaum eine Verbesserung gegenüber der Verwendung nur eines Spaltes erzielen. Es konnte vielmehr sogar beobachtet werden, daß die Prägeergebnisse schlechter waren. Dies ist darauf zurückzuführen, daß die zu dekorierende Materialbahn und die Prägefolie nach dem Verlassen eines Spaltes relativ rasch abkühlen, was bedeutet, daß in dem nächsten Spalt eine nahezu vollständige erneute Erhitzung erfolgen muß. Die Abkühlung der Folie kann außerdem dazu führen, daß sich das Muster aufgrund von Schrumpfungen in der Prägefolie verzieht. Diese Dekorationsfehler werden dann beim Durchlauf durch weitere Spalten gleichsam "fixiert".

Der Erfindung liegt nun die Aufgabe zugrunde, ein Verfahren und eine hierzu gehörige Vorrichtung der jeweils eingangs genannten Art vorzuschlagen, die es gestatten, Materialbahnen mit bandförmigen Heißprägefolien bei einwandfreier Qualität, jedoch mit sehr hohen Durchlaufgeschwindigkeiten zu dekorieren.

Zur Lösung dieser Aufgabe wird nach der Erfindung ein Verfahren vorgesehen, welches sich dadurch auszeichnet, daß die Materialbahn und die Heißprägefolie gemeinsam durch mehrere in Abstand voneinander entlang der beheizten Oberfläche des Stützkörpers angeordneten Andruckrollen gegeneinander und gegen die beheizte Oberfläche des Stützkörpers gedrückt und zwischen den Andruckrollen entlang der beheizten Oberfläche des Stützkörpers geführt werden.

Bei dem Verfahren nach der Erfindung sind somit hintereinander mehrere Spalte vorgesehen, durch die die Materialbahn mit der Prägefolie läuft, wobei in diesen Spalten jeweils ein Andruck der Prägefolie gegen die zu dekorierende Materialbahn durch eine Andruckrolle erfolgt. Der wesentliche Unterschied zu dem bekannten Vorgehen besteht nun darin, daß die Materialbahn mit der Prägefolie auf dem Weg zwischen den einzelnen Spalten stets beheizt bleibt somit keine Abkühlung in dem Zwischenraum zwischen den verschiedenen Andruckrollen erfolgt. Auf diese Weise kann die Arbeitsgeschwindigkeit gegenüber dem bisher bekannten Vorgehen ganz erheblich gesteigert werden. Während es bisher als unmöglich galt, mit Geschwindigkeiten von mehr als 30 m/min. zu arbeiten, lassen sich bei einem Vorgehen nach der Erfindung ohne weiteres Arbeitsgeschwindigkeiten von über 150 m/min. erzielen, d.h. es kann die Arbeitsgeschwindigkeit auf das 5-fache gesteigert werden. Da keine Abkühlung der Materialbahn und der Prägefolie zwischen den einzelnen Andruckrollen stattfindet, besteht auch nicht die Gefahr, daß Verzerrungen des Dekorbildes auftreten. Man erreicht somit bei einem Vorgehen nach der Erfindung nicht nur eine erhebliche Steigerung der Arbeitsgeschwindigkeit sondern gleichzeitig eine ganz wesentliche Verbesserung der Qualität der Prägung.

Zur Erzielung hoher Arbeitsgeschwindigkeiten ist es zweckmäßig, wenn als Stützkörper eine beheizte Walze verwendet wird, die entsprechend großen Radius aufweisen kann.

Um eine Beschädigung der Materialbahn und Mängel in der Prägung weitgehend auszuschalten, ist es weiter günstig, wenn die Spannung der über den Stüzkörper geführten Materialbahn etwa konstant gehalten wird.

Wie bereits erwähnt, befasst sich die Erfindung auch mit einer Vorrichtung zur Durchführung des oben erläuterten Verfahrens. Diese Vorrichtung ist erfindungsgemäß derart ausgebildet, daß um die Prägewalze in Abstand voneinander mehrere einzeln verstellbare, achsparallele Andruckrollen angeordnet sind, die derart an die Prägewalze anlegbar sind, daß beim Anlegen zuerst eine oder zwei benachbarte, innere Andruckrollen an der Prägewalze angreifen und dann nach außen fortschreitend die weiteren Andruckrollen zur Anlage an der Prägewalze bringbar sind.

Der vorstehend erläuterte Aufbau der Vorrichtung nach der Erfindung ist sehr wesentlich, wenn es darum geht, die Vorrichtung zu beschicken, d.h. einen Prägevorgang zu starten bzw. zu beenden. Würde man die Andruckrolle nämlich nicht in der vorstehend geschilderten Weise anordnen und bewegen, wäre zu befürchten, daß die Materialbahn mit der Prägefolie während des Einziehens in den Bereich zwischen den Andruckrollen und der Prägewalze teilweise zu stark erhitzt und damit voraktiviert wird. In diesem Bereich könnte dann keine einwandfreie Prägung mehr erreicht werden. Es wäre sogar zu befürchten, daß infolge Überhitzung die Materialbahn und die Prägefolie beschädigt werden, was vor allem bei wertvollen Materialien nicht in Kauf genommen werden kann. Baut man dagegen erfindungsgemäß einen Rollenkorb Rolle für Rolle von innen nach außen fortschreitend auf, so ist gewährleistet, daß es nirgends zu einer Überhitzung bzw. Voraktivierung der Materialbahn und Prägefolie kommen kann. Außerdem wird das Einlegen der Folie und der zu dekorierenden Materialbahn in die Vorrichtung unter Umständen ganz erheblich vereinfacht.

In der Praxis hat es sich als günstig herausgestellt, wenn man derart vorgeht, daß die Andruckrollen in zwei Gruppen symmetrisch zur Prägewalze angeordnet und die jeweils einander bezüglich der Symmetrieebene entsprechenden Andruckrollen der beiden Gruppen in gleicher Weise beweglich sind. Eine bevorzugte Ausführungsform besteht dabei darin, daß jede Gruppe vier Andruckrollen umfasst, von denen je zwei nahe beeinander auf einer ersten bzw. zweiten Wippe gelagert sind, daß die beiden Wippen um eine zur Rotationsachse der Andruckrollen parallele Achse an einem ersten bzw. zweiten Winkelhebel kippbar sind, daß der erste Winkelhebel mittels eines etwa mittig angreifenden, ersten Stelltriebes um eine zur Achse der Prägewalze bzw. der Andruckrollen parallele Hauptachse zur Anlage der an der ersten Wippe gelagerten Andruckrollen an der Prägewalze schwenkbar ist, und daß der zweite Winkelhebel etwa mittig an einem um die Hauptachse verdrehbaren Träger schwenkbar gelagert und gemeinsam mit dem Träger mittels eines an dem zweiten Winkelhebel der Wippe gegenüberliegend angreifenden zweiten Stelltriebes beweglich ist. Bei einer derartigen Ausbildung der Vorrichtung lassen sich in der angestrebten Weise die Andruckrollen von innen nach außen fortschreitend nacheinander gegen die Prägewalze anlegen.

Die Anlage der äußeren Andruckrollen an der Prägewalze wird vorteilhafterweise derart bewerkstelligt, daß der zweite Winkelhebel federnd in einer Ruhelage gegenüber dem Träger gehalten und bei Erreichen einer zum Anlegen der an der zweiten Wippe gelagerten Andruckrollen an der Prägewalze ausreichenden Schwenkstellung des Trägers, in der dieser einem Anschlag anliegt, gegen die Wirkung der Feder mittels des zweiten Stelltriebes aus der Ruhelage in Richtung auf die Prägewalze herauskippbar ist. Infolge der Kopplung der Kipp- bzw. Schwenkbewegungen des Trägers und des zweiten Winkelhebels und der Verhinderung einer Kippung des zweiten Winkelhebels während der Verschwenkung des Trägers ergibt sich eine ganz spezielle, ein sauberes Anlegen der äußeren Andruckrollen an der Prägewalze bewerkstelligende Bewegung.

Es ist nach der Erfindung weiter vorgesehen, daß die Prägewalze entweder mittels eines separaten, regelbaren Antriebes, vorzugsweise eines Gleichstrommotors, oder über eine Rutschkupplung mit regelbarem Drehmoment, beispielsweise eine elektrische Magnetpulverkupplung, angetrieben ist. Auf diese Weise besteht die Möglichkeit, die Drehgeschwindigkeit der Prägewalze in Anpassung an das verarbeitete Material zu wählen und insbesondere eine genaue Abstimmung der Drehgeschwindigkeit der Prägewalze mit der Aufwickelgeschwindigkeit der beprägten Materialbahn bzw. der Trägerbahn der Prägefolie zu erreichen. Eine derartige genaue Abstimmung ist deswegen wichtig, weil nur auf diese Weise für eine gleichmäßige Spannung der Materialbahn nach dem Verlassen des Prägebereiches gesorgt werden kann. Eine solche gleichmäßige Spannung ist aber unbedingt zur Erzielung eines guten Prägeergebnisses erforderlich.

Zur Regelung des Drehmomentes der Rutschkupplung bzw. des separaten Antriebes der Prägewalze dient vorzugsweise eine in Abhängigkeit von der Spannung der Materialbahn in Durchlaufrichtung hinter der Prägewalze verstellbare Tänzerwalze. Zu diesem Zweck ist eine Schlaufe der Materialbahn vorgesehen. Diese Schlaufe wird bei größerer Spannung kürzer, bei geringerer Spannung länger. Abhängig hiervon bewegt sich dann die Tänzerwalze und beeinflusst über an sich bekannte Mittel, beispielsweise Elektronikelemente, den Antrieb bzw. die Rutschkupplung, z.B. eine elektrische Magnetpulverkupplung, für die Prägewalze, wodurch das von dem Antrieb für die Prägewalze übertragene Drehmoment oder die Drehgeschwindigkeit des Antriebs verändert werden können.

Zur Erzielung guter Ergebnisse hat es sich weiter als günstig erwiesen, wenn Einrichtungen zur Konstanthaltung der Spannung der Materialbahn und der Prägefolie zwischen entsprechenden Vorratsrollen und der Prägewalze vorgesehen sind. Zur Konstanthaltung der Spannung dienen dabei vorzugsweise Bremseinrichtungen an den Vorratsrollen und/oder besondere Bremsrollen für die Materialbahn oder die Prägefolie.

Weitere Einzelheiten und Vorteile der Erfindung ergeben sich aus der folgenden Beschreibung eines bevorzugten Ausführungsbeispiels einer Vorrichtung zur Durchführung des erfindungsgemässen Verfahrens anhand der Zeichnung. Hierbei zeigen, jeweils schematisch:

Fig. 1 eine Seitenansicht der wesentlichen Teile einer Vorrichtung zur Durchführung des Prägeverfahrens gem. der Erfindung;

Fig. 2 in vergrößertem Maßstab den die Prägewalze und die Andruckrollen aufweisenden Mittelbereich der Vorrichtung gem. Fig. 1, wobei sich die Andruckrollen in einer das Einlegen einer Materialbahn zu Beginn des Prägevorganges ermöglichenden Stellung befinden und

Fig. 3 eine Ansicht entsprechend Fig. 2, jedoch bei bereits teilweise an die Prägewalze angelegten Andruckrollen, wobei ausgezogen ein erster Anstellschritt für die Andruckrollen und gestrichelt ein zweiter Anstellschritt dargestellt sind.

Der Aufbau der Vorrichtung soll nachstehend gleich in Verbindung mit der grundsätzlichen Prägefunktion erläutert werden.

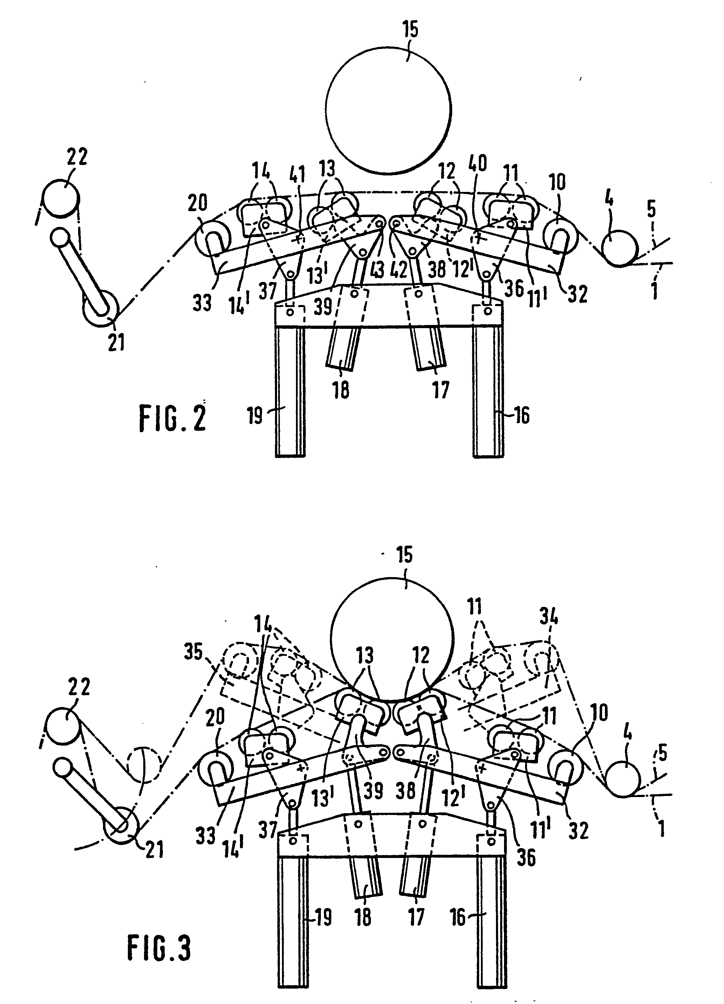

Die zu beprägende Materialbahn 1 wird von einer Vorratsrolle 2 abgezogen und gelangt über Umlenkrollen 3 und 4 zu der eigentlichen, in den Fig. 2 und 3 vergrößert gezeigten Prägestation. Auf die Achse der Vorratsrolle 2 wirkt eine Bremse. Auf diese Weise ist es möglich, die Spannung der zu beprägenden Materialbahn konstant zu halten.

Die Prägefolie 5 ist ebenfalls auf einer Vorratsrolle 6 gespeichert. Ausgehend von der Vorratsrolle 6 läuft die Prägefolie 5 über eine erste Umlenkrolle zu einer Bremsrolle 7. Sie läuft dann über weitere Umlenkrollen 8 und 9 und gelangt zu der Umlenkrolle 4, wo sie auf die zu beprägende Materialbahn 1 aufläuft. Die Spannung des Prägefolien-Bandes kann mittels der Bremsrolle 7 unabhängig vom Durchmesser der Vorratsrolle 6 konstant gehalten werden.

Die Anordnung aus Materialbahn 1 und Prägefolie 5 läuft von der Umlenkrolle 4 aus über eine Umlenkrolle l0 in den Spalt zwischen den Andruckrollen-Paaren 11, 12, 13, 14 und der beheizten Prägewalze 15. Die Andruckrollen-Paare 11, 12, 13 und 14 drücken mit Hilfe der als Stelltriebe dienenden Zylinder 16, 17, 18 und 19 die Materialbahn 1 und die Prägefolie 5 fest gegen die Prägewalze 15, so daß der erforderliche Prägedruck aufgebracht wird. Die Anordnung der Andruckrollen 11, 12, 13 und 14 ist dabei derart, daß die Prägewalze, wie aus Fig. 1 deutlich hervorgeht, zu etwa 170° von der Materialbahn 1 mit der Prägefolie 5 umschlungen wird.

Nach Verlassen der Umlaufbahn um die Prägewalze 15 läuft die beprägte Materialbahn mit der Prägefolie über eine Umlenkrolle 20. Von dieser Umlenkrolle 20 gelangt die beprägte Materialbahn nach Umlenkung durch eine Tänzerwalze 21 zu einer weiteren Umlenkrolle 22 sowie zu einer Kühlwalze 23. Die Kühlwalze 23 dient zur Abkühlung der Materialbahn einerseits.

Andererseits ist die Kühlwalze 23 angetrieben und zieht die Materialbahn mit der Prägefolie aus der Prägestation ab. Die Funktion der Tänzerwalze 21 wird weiter unten näher erläutert.

Um zu verhindern, daß die Materialbahn mit der Prägefolie gegenüber der Kühlwalze 23 durchrutscht und nicht einwandfrei abgezogen wird, ist eine gummibeschichtete Presswalze 24 vorgesehen, die mittels eines Zylinders 25 gegen die Oberfläche der Kühlwalze 23 angedrückt wird.

Anschließend an die Kühlwalze 23 läuft das Gebilde aus Materialbahn 1 und Prägefolie 5 über eine Umlenkwalze 26. Anschließend an die Umlenkwalze 26 ist eine einsstellbare Kante 27 vorgesehen, die dazu dient, die Trägerbahn der Prägefolie von der Materialbahn abzulösen, so daß nur die Dekorschicht auf der Materialbahn verbleibt. Die Trägerbahn der Prägefolie wird dann über eine Umlenkrolle 28 der Aufwickelrolle 29 zugeführt. Die beprägte Materialbahn gelangt über die Umlenkrolle 30 zu einer Aufwickelspule 31.

Zum Antrieb der Kühlwalze 23 dient bei dem gezeigten Ausführungsbeispiel z.B. ein regelbarer Gleichstrommotor. Dieser ist der Leitantrieb und bestimmt die Prägegeschwindigkeit.

Der Antrieb der Prägewalze erfolgt über einen weiteren Gleichstrommotor, wobei die Übersetzung zwischen Motor und Prägewalze derart ausgelegt ist, daß es möglich ist, die Umfangsgeschwindigkeit der Prägewalze 15 etwas höher als die Umfangsgeschwindigkeit der Kühlwalze 23 zu wählen. Es ist jedoch erforderlich, einen Synchronlauf der beiden Walzen 15 und 23 zu erreichen. Zu diesem Zweck kann die Drehgeschwindigkeit des Antriebs der Prägewalze, beispielsweise auch über Veränderung des Drehmoments, verändert werden. Zur Einstellung der Drehgeschwindigkeit des Gleichstrommotor-Antriebes bzw. der Umfangsgeschwindigkeit der Prägewalze 15 dient die Tänzerwalze 21. Bewegt sich die Tänzerwalze nach unten (in Fig. 1), so bedeutet dies, daß die Prägewalze 15 schneller läuft als die Kühlwalze 23. In diesem Falle wird die Drehgeschwindigkeit der Prägewalze 15 vermindert. Dies hat dann zur Folge, daß die Tänzerwalze 21 nach oben wandert. Bei einer derartigen Bewegung der Tänzerwalze erhöht sich die Umfangsgeschwindigkeit der Prägewalze 15. Versuche haben gezeigt, daß bereits nach kurzer Zeit die Trägerwalze 21 eine nahezu stabile Position einnimmt. Es ist auf diese Weise ohne Schwierigkeiten eine einwandfreie Synchronisation der Umfangsgeschwindigkeiten von Prägewalze 15 und Kühlwalze 23 möglich.

Bei Verwendung einer Rutschkupplung mit veränderlichem Drehmoment wird der Antrieb für die Prägewalze 15 derart ausgelegt, daß diese sich normalerweise mit höherer Umfangsgeschwindigkeit als die Kühlwalze 23 dreht. Durch Veränderung des übertragenen Drehmomentes mittels der Tänzerwalze 2l und in Abhängigkeit von den beim Betrieb auf die Prägewalze 15 wirkenden Bremskräften kann dann die tatsächliche Umfangsgeschwindigkeit der Prägewalze 15 an die der Kühlwalze 23 angepaßt werden.

Eines der wesentlichsten Kennzeichen der Maschine nach der Erfindung liegt in der speziellen Ausbildung der Prägestation, wie sie vor allem aus den Figuren 2 und 3 ersichtlich ist.

Wie bereits erwähnt, ist es nicht möglich, daß beim Anfahren der Maschine, d.h. beim Einlegen der Materialbahn und der Prägefolie, die beheizte Prägewalze 15 in einen vorgeformten Rollenkorb eintaucht. Bei einem derartigen Vorgehen bestünde nämlich die Gefahr einer störenden Voraktivierung der Materialien, ja sogar die Gefahr, daß die Prägefolie bzw. die zu dekorierende Materialbahn durchschmelzen. Aus diesem Grunde ist die Maschine nach der Erfindung derart ausgebildet, daß der von den Andruckrollen-Paaren 11, 12, 13, 14 gebildete Rollenkorb aus einer gestreckten Ausgangslage (Fig. 2) von innen nach außen fortschreitend allmählich derart in Richtung auf die Prägewalze 15 bewegt werden kann, daß die Andruckrollenpaare 11, 12, 13, 14 nacheinander und zwar in der Reihenfolge 12, 13 und dann 11, 14 an den Umfang der Prägewalze 15 angelegt werden, ohne daeine nennenswerte Voraktivierung der Prägefolie bzw. der Materialbahn erfolgt. Die einzelnen Schritte beim Anlegen der Andruckrollen an den Umfang der Prägewalze 15 sind aus Fig. 3 ersichtlich.

Wie die Zeichnungen deutlich erkennen lassen, sind die Andruckrollen-Paare 11, 12, 13, 14 jeweils einzeln auf einer Wippe 11', 12', 13', 14' gelagert. Die Wippen 11', 12', 13', 14' sind ihrerseits jeweils an Winkelhebeln 36, 37, 38, 39 kippbar gelagert. Die Winkelhebel 36, 37, 38, 39 stehen unter der Wirkung der Stellzylinder 16, 17, 18, 19.

Wie die Zeichnung deutlich erkennen läßt, ist die Anordnung bezüglich der Winkelhebel 36 und 37 derart, daß diese Winkelhebel um eine etwa mittige Achse 40 bzw. 41 an einem Träger 32 bzw. 33 schwenkbar gelagert sind. Am einen Ende des Winkelhebels 36, 37 sitzt jeweils die Wippe 11' bzw. 14'. Am anderen Ende des Winkelhebels greifen die Stellzylinder 16 bzw. 19 an.

Die Träger 32, 33 sind jeweils um eine zur Drehachse der prägewalze 15 parallele Hauptachse 42 bzw. 43 (Figuren 1, 2) kippbar.

Die Hauptachsen 42, 43 dienen gleichzeitig als Lagerachsen für die Winkelhebel 38, 39, die dort mit ihrem einen Ende gelagert sind. Das andere Ende trägt die Wippen 12' bzw. 13'. Die Stellzylinder 17 bzw. 18 greifen etwa mittig zwischen Wippen 12', 13' und Hauptachse 42, 43 an.

Es ist noch darauf hinzuweisen, daß die Winkelhebel 36, 37 mittels Zugfedern, die in der Zeichnung nicht dargestellt sind, normalerweise in der in Fig. 3 ausgezogenen Position gegenüber den Trägern 32, 33 gehalten sind. Erst bei Bewegung der Träger 32, 33 in die gestrichelten Stellungen 34, 35 der Fig. 3 schlagen die Träger 32, 33 gegen nicht dargestellte Anschläge und es kann dann bei weiterer Einwirkung der Stellzylinder 16, 19 auf die Winkelhebel 36, 37 deren Kippen in Richtung auf die Prägewalze 15 gegen die Wirkung der Rückstellfeder erreicht werden.

Beim Arbeiten mit der Vorrichtung nach der Erfindung geht man wie folgt vor:

Vor dem Einlegen der Materialbahn bzw. der Prägefolie wird der von den Andruckrollen 11, 12, 13, 14 gebildete Rollenkorb durch entsprechende Betätigung der Stellzylinder 16, 17, 18, 19 in die Position gem. Fig. 2 gebracht, in welcher es möglich ist, die Materialbahn 1 mit der Prägefolie 5 frei in Abstand von der Prägewalze 15 vorbeizuführen. Die Tänzerwalze 21 befindet sich, da ja keine Zugspannung der durch die Vorrichtung laufenden Materialbahn auf sie wirkt, in der untersten Endstellung. Während der Aufheizphase und in Arbeitspausen dreht sich die Prägewalze 15 mit einer gegenüber dem Normalbetrieb verminderten Drehzahl, um eine einseitige Abkühlung der Prägewalze 15 zu verhindern.

Zum Anfahren der Vorrichtung wird die Materialbahn 1 mit der Prägefolie 5 um den Umfang der Kühlwalze 23 gelegt und es wird dann die Presswalze 24 mittels des Zylinders 25 gegen den Umfang der Kühlwalze 23 angelegt. Nunmehr werden der Antrieb der Kühlwalze 23 eingeschaltet und die Drehgeschwindigkeit der Prägewalze 15 erhöht, was zur Folge hat, dass die Materialbahn 1 und die Prägefolie 5 mit einer geringen Geschwindigkeit in die Vorrichtung eingezogen werden. Während dieses Zeitraumes ist die Funktion der Tänzerwalze 21 abgeschaltet und der Antrieb der Prägewalze 15 so geregelt, dass sich die Prägewalze 15 etwas schneller dreht als es der Bewegungsgeschwindigkeit der Materialbahn 1 mit der Prägefolie 5 entspricht. Eine Regelfunktion der Tänzerwalze 21 kann erst erfolgen, wenn die Andruckrollen 11, 12, 13, 14 gegen die Prägewalze 15 angelegt sind.

Sobald die Maschine angelaufen ist, werden dann die Rollen-Paare 12, 13 durch Betätigung der Stellzylinder 17 bzw. 18 angelegt, wie dies aus Fig. 3 (ausgezogene Position) ersichtlich ist. Zu diesem Zweck werden lediglich die Winkelhebel 38, 39 um die Hauptachsen 42, 43 verschwenkt. Die einwandfreie Anlage der Andruckrollen 12, 13 wird durch die Verwendung der Wippen 12', 13' ermöglicht. Bei diesem Anlegen der Andruckrollen 12, 13 gegen den Umfang der Trägerwalze 15 wird der Weg der Materialbahn 1 durch die Vorrichtung länger. Diese Wegdifferenz kann aber durch entsprechende Bewegung der Tänzerwalze 21 ausgeglichen werden.

Sobald die Andruckrollen 12, 13 sauber am Umfang der Prägewalze 15 anliegen, werden die Stellzylinder 16 und 19 betätigt. Dabei werden, da ja die Winkelhebel 36, 37 durch Federn in Ihrer Ruhestellung gemäss Fig. 3 gehalten sind, zuerst die Träger 32, 33 angehoben, und zwar soweit, bis sie die in Fig. 3 gestrichelt gezeichnete Position 34 bzw. 35 einnehmen. In dieser Position laufen sie gegen Anschläge an. Bei weiterer Bewegung der Stellzylinder 16 und 19 werden dann die Winkelhebel 36 und 37 und damit die Wippen 11' bzw. 14' mit den Andruckrollen 11 und 14 nach innen bewegt und gelangen zur Anlage an dem Umfangder Prägewalze 15. Diese Position ist in Fig. 1 gezeigt.

Auch in diesem Fall erfolgt eine Verlängerung des Weges der Materialbahn 1 bzw. der Prägefolie 5. Diese Wegverlängerung kann einlaufseitig durch entsprechende Weiterdrehung der Vorratsrollen 2 und 6, auslaufseitig durch Veränderung der Position der Tänzerwalze 21 ausgeglichen werden.

Nunmehr ist die Vorrichtung betriebsbereit. Es muss lediglich noch durch das Spiel der Tänzerwalze 21 das entsprechende Gleichgewicht zwischen Umfangsgeschwindigkeit der Prägewalze 15 und der Kühlwalze 23 erreicht werden.

Wie bereits erwähnt, lassen sich mit der Vorrichtung nach der Erfindung gegenüber den bekannten Vorrichtungen erheblich erhöhte Geschwindigkeiten erzielen. Es ist eine Steigerung der Arbeitsgeschwindigkeit bis zum Faktor 5 möglich.

Die Anwendungsgebiete des Verfahrens und der Vorrichtung nach der Erfindung sind äusserst vielfältig. Es ist eine Anwendung bei magnetisierbaren sowie Metallund Farbfolien möglich. Beispielsweise können nach der Erfindung Magnet- oder Kennstreifen auf Tickets angebracht werden.

Besondere Prägeeffekte lassen sich bei einem Vorgehen nach der Erfindung dann erreichen, wenn die Oberfläche der Prägewalze 15, gegebenenfalls auch einer oder mehrerer der Andruckwalzen 11 bis 14, gemäss einem bestimmten Muster graviert sind, d.h. erhabene und vertiefte Bereiche aufweist, wobei eine Übertragung der Dekorschicht von der Prägefolie auf die Materialbahn nur über die erhabenen Oberflächenbereiche erfolgt.

Es sei weiter der Vollständigkeit halber erwähnt, daß nicht nur die Prägewalze sondern auch mindestens eine der Andruckrollen beheizt werden können.

## Patentansprüche

1. Verfahren zum Anbringen eines Prägefolien-Abdruckes auf einer flexiblen, vorzugsweise bandförmigen Materialbahn (1), wobei eine bandförmige Heißprägefolie (5) unter gleichzeitiger Erwärmung mittels Rollendruck gegen die an einem erhitzen Stützkörper (15) anliegende Materialbahn (1) gepreßt und nach dem Anpressen und Abkühlen die Trägerbahn der Heißprägefolie (5) von deren auf der Materialbahn (1) verbleibender Dekorschicht abgezogen wird, dadurch gekennzeichnet, daß die Materialbahn (1) und die Heißprägefolie (5) gemeinsam durch mehrere in Abstand voneinander entlang der beheizten Oberfläche des Stützkörpers (15) angeordnete Andruckrollen (11, 12, 13, 14) gegeneinander und gegen die beheizte Oberfläche des Stützkörpers gedrückt und zwischen den Andruckrollen (11, 12, 13, 14) entlang der beheizten Oberfläche des Stützkörpers (15) geführt werden.

2. Verfahren nach Anspruch 1, dadurch gekennzeichnet, daß als Stützkörper eine beheizte Walze (15) verwendet wird.

3. Verfahren nach Anspruch 1 oder 2, dadurch gekennzeichnet, daß die Spannung der über den Stützkörper (15) geführten Materialbahn (1) etwa konstant gehalten wird.

4. Vorrichtung zur Durchführung des Verfahrens nach einem der vorhergehenden Ansprüche mit einer als Stützkörper dienenden, beheizten Prägewalze (15) und einer an deren Oberfläche anlegbaren Druckrolleneinrichtung (11, 12, 13, 14), dadurch gekennzeichnet, daß um die Prägewalze (15) in Abstand voneinander mehrere einzeln verstellbare achsparallele Andruckrollen (11, 12, 13, 14) angeordnet sind, die derart an die Prägewalze (15) anlegbar sind, daß beim Anlegen zuerst eine oder zwei benachbarte innere Andruckrollen (12, 13) an der Prägewalze (15) angreifen und dann nach außen fortschreitend die weiteren Andruckrollen (11, 14) zur Anlage an der Prägewalze (15) bringbar sind.

5. Vorrichtung nach Anspruch 4, dadurch gekennzeichnet, daß die Andruckrollen (11, 12, 13, 14) in zwei Gruppen (11, 12; 13, 14) symmetrisch zur Prägewalze (15) angeordnet und die jeweils einander bezüglich der Symmetrieebene entsprechenden Andruckrollen der beiden Gruppen in gleicher Weise beweglich sind.

6. Vorrichtung nach Anspruch 4 und 5, dadurch gekennzeichnet, daß jede Gruppe vier Andruckrollen umfaßt, von denen je zwei nahe beieinander auf einer ersten bzw. zweiten Wippe (11', 12', 13', 14') gelagert sind, daß die beiden Wippen um eine zur Rotationsachse der Andruckrollen (11, 12, 13, 14) parallele Achse an einem ersten bzw. zweiten Winkelhebel (36, 37, 38, 39) kippbar sind, daß der erste Winkelhebel (38, 39) mittels eines etwa mittig angreifenden ersten Stelltriebes (17, 18) um eine zur Achse der Prägewalze (15) bzw. der Andruckrollen (11, 12, 13, 14) parallele Hauptachse (42, 43) zur Anlage der an der ersten Wippe (12', 13') gelagerten Andruckrollen (12, 13) an die Prägewalze (15) schwenkbar ist, und daß der zweite Winkelhebel (36, 37)an einem um die Hauptachse (42, 43) verdrehbaren Träger (32, 33) schwenkbar gelagert und gemeinsam mit dem Träger mittels eines an dem zweiten Winkelhebel (36, 37) der Wippe (11', 14') gegenüberliegend angreifenden zweiten Stelltriebes (16, 19) beweglich ist.

7. Vorrichtung nach Anspruch 4 bis 6, dadurch gekennzeichnet, daß der zweite Winkelhebel (36, 37) federnd in einer Ruhelage gegenüber dem Träger (32, 33) gehalten und bei Erreichen einer zum Anlegen der an der zweiten Wippe (11', 14') gelagerten Andruckrollen (11, 14) an der Prägewalze (15) ausreichenden Schwenkstellung des Trägers (32, 33), in der dieser einem Anschlag anliegt, gegen die Wirkung der Feder mittels des zweiten Stelltriebes (36, 37) aus der Ruhelage in Richtung auf die Prägewalze (15) herauskippbar ist.

8. Vorrichtung nach einem der Ansprüche 4 bis 7, dadurch gekennzeichnet, daß die Prägewalze (15) mittels eines separaten, regelbaren Antriebes, vorzugsweise mittels eines Gleichstrommotors, angetrieben ist.

9. Vorrichtung nach einem der Ansprüche 4 bis 7, dadurch gekennzeichnet, daß die Prägewalze (15) über eine Rutschkupplung mit regelbarem Drehmoment angetrieben ist.

10. Vorrichtung nach Anspruch 8 oder 9, dadurch gekennzeichnet, daß zur Regelung des Drehmomentes der Rutschkupplung bzw. des separaten Antriebes eine in Abhängigkeit von der Spannung der Materialbahn (1) in Durchlaufrichtung hinter der Prägewalze (15) verstellbare Tänzerwalze (21) dient.

11. Vorrichtung nach einem der Ansprüche 4 bis 10, dadurch gekennzeichnet, daß eine Einrichtung zur Konstanthaltung der Spannung der Materialbahn (1) und der Prägefolie (5) zwischen entsprechenden Vorratsrollen (2, 6), und der Prägewalze (15) vorgesehen sind.

12. Vorrichtung nach Anspruch 11, dadurch gekennzeichnet, daß zur Konstanthaltung der Spannung Bremseinrichtungen an den Vorratsrollen (2) und/oder besondere Bremsrollen (7) für die Materialbahn (1) oder die Prägefolie (5) dienen.

## Claims

1. Process for making an embossing-film imprint on a flexible, preferably strip-shaped sheet of material (1), in which a strip-shaped hot-embossing film (5), whilst being heated at the same time, is pressed by means of roller pressure against the sheet of material (1) resting against a heated supporting body (15), and after pressing and cooling the backing sheet of the hot-embossing film (5), is pulled off from its decorative layer which remains on the sheet of material (1), characterized in that the sheet of material (1) and the hot-embossing film (5) are jointly pressed against one another and against the heated surface of the supporting body by several pressure rollers (11, 12, 13, 14), arranged at a distance from one another along the heated surface of the supporting body (15), and are guided between the pressure rollers (11, 12, 13, 14) along the heated surface of the supporting body (15).

2. Process according to Claim 1, characterized in that a heated cylinder (15) is used as a supporting body.

3. Process according to Claim 1 or 2, characterized in that the tension of the sheet of material (1) guided over the supporting body (15) is kept approximately constant.

4. Apparatus for carrying out the process according to one of the preceding claims, with a heated embossing cylinder (15) serving as a supporting body, and with a pressure-roller arrangement (11, 12, 13, 14) which can be laid against its surface, characterized in that several individually adjustable axis-parallel pressure rollers (11, 12, 13, 14) are arranged at a distance from one another round the embossing cylinder (15) and can be laid against the embossing cylinder (15), in such a way that when they come up against it, one or two adjacent inner pressure rollers (12, 13) engage on the embossing cylinder (15) first, and then, progressively towards the outside, the further pressure rollers (11, 14) can be brought up against the embossing cylinder (15).

5. Apparatus according to Claim 4, characterized in that the pressure rollers (11, 12, 13, 14) are arranged in two groups (11, 12; 13, 14) symmetrically relative to the embossing cylinder (15), and the particular pressure rollers of the two groups which correspond to one another in relation to the plane of symmetry are movable in the same way.

6. Apparatus according to Claims 4 and 5, characterized in that each group comprises four pressure rollers which are respectively mounted in pairs next to one another on a first and a second rocker (11', 12', 13', 14'), in that the two rockers are each tiltable respectively on a first and a second angle lever (36, 37, 38, 39) about an axis parallel to the axis of rotation of the pressure rollers (11, 12, 13, 14), in that the first angle lever (38, 39) is pivotable, by means of a first actuating drive (17, 18) engaging approximately centrally, about a main axis (42, 43) parallel to the axis of the embossing cylinder (15) or of the pressure rollers (11, 12, 13, 14) to bring the pressure rollers (12, 13) mounted on the first rocker (12', 13') up against the embossing cylinder (15), and in that the second angle lever (36, 37) is mounted pivotably on a support (32, 33) rotatable about the main axis (42, 43) and is movable, together with the support, by means of a second actuating drive (16, 19) engaging opposite on the second angle lever (36, 37) of the rocker (11', 14').

7. Apparatus according to Claims 4 to 6, characterized in that the second angle lever (36, 37) is held resiliently in a position of rest relative to the support (32, 33) and, when a pivoting position of the support (32, 33) is reached, which is sufficient to bring the pressure rollers (11, 14) mounted on the second rocker (11', 14') up against the embossing cylinder (15) and in which the support (32, 33) rests against a stop, can be tilted out of the position of rest in the direction of the embossing cylinder (15) counter to the effect of the spring by means of the second actuating drive (36, 37).

8. Apparatus according to one of Claims 4 to 7, characterized in that the embossing cylinder (15) is driven by means of a separate variable drive, preferably by means of a direct-current motor.

9. Apparatus according to one of Claims 4 to 7, characterized in that the embossing cylinder (15) is driven via a slipping clutch with variable torque.

10. Apparatus according to Claim 8 or 9, characterized in that a compensating roller (21) adjustable as a function of the tension of the sheet of material (1) and located behind the embossing cylinder (15) in the running direction serves for varying the torque of the slipping clutch or of the separate drive.

11. Apparatus according to one of Claims 4 to 10, characterized in that a device for keeping constant the tension of the sheet of material (1) and of the embossing film (5) is provided between corresponding supply rolls (2, 6) and the embossing cylinder (15).

12. Apparatus according to Claim 11, characterized in that braking devices of the supply rolls (2) and/or special braking rollers (7) for the sheet of material (1) or the embossing film (5) serve for keeping the tension constant.


**Revendications**

Procédé pour appliquer l'empreinte d'une feuille de gaufrage sur une bande de matière flexible (1), de préférence en forme de ruban, dans lequel une feuille de gaufrage à chaud (5) en forme de bande est, avec un chauffage simultané, pressée à l'aide d'une presson de rouleaux contre la bande de matière (1) qui est en appui sur un corps d'appui chauffé (15) et dans lequel, après le pressage et un refroidissement, la bande de support de la feuille de gaufrage à chaud (5) est enlevée de sa couche decorative qui subsiste sur la bande de matière (1), caractérisé en ce que la bande de matière (1) et la feuille de gaufrage à chaud (5) sont pressées conjointement l'une contre l'autre et contre la surface chauffée du corps d'appui par plusieurs rouleaux presseurs (11, 12, 13, 14) agencés à distance l'un de l'autre le long de la surface chauffée du corps d'appui (15) et sont guidées entre les rouleaux presseurs (11, 12, I3, 14) le long de la surface chauffée du corps d'appui (15).

2. Procédé suivant la revendication 1, caraciérisé en ce que, comme corps d'appui, on utilise un cylindre chauffé (15).

3. Procédé suivant l'une des revendications et 2, caractérisé en ce que la tension de la bande de matière (1) guidée sur le corps d'appui (15) est maintenue approximativement constante.

4. Dispositif pour la mise en oeuvre du procédé suivant l'une des revendications précédentes, comprenant un cylindre de gaufrage (15) chauffé, servant de corps de soutien, et un dispositif de rouleaux presseurs (11, 12, 13, 14) qui peut être applique sur la surface du cylindre de gaufrage, caraciérisé en ce que, autour du cylindre de gaufrage (15), sont agencés à distance l'un de l'autre plusieurs rouleaux presseurs (11, 12, 13, 14) indépendamment ajustables et à axes parallèles, qui peuvent être appliqués sur le cylindre de gaufrage (15) de façon que, lors de l'application, tout d'abord un ou deux rouleaux presseurs internes voisins (12, 13) agissent sur le cylindre de gaufrage (15) et qu'ensuite, progressivement vers l'extérieur les autres rouleaux presseurs (11, 14) puissent être amenés en appui sur le cylindre de gaufrage (15).

5. Dispositif suivant la revendication 4, caractérisé en ce que les rouleaux presseurs (11, 12, 13, 14) sont agencés en deux groupes (11, 12; 13, 14) de manière symétrique au cylindre de gaufrage (1 5) et en ce que les rouleaux presseurs correspondants, chaque fois par rapport au plan de symétrie, des deux groupes sont deplaçablses de la même manière.

6. Dispositif suivant l'une des revendications 4 et 5, caractérisé en ce que chaque groupe comprend quatre rouleaux presseurs, dont chaque fois deux situés l'un près de l'autre sont supportés sur une première ou respectivement deuxième bascule (11, 12,13, 14), en ce que les deux bascules sont capables de basculer sur un premier ou respectivement deuxième levier coudé (36, 37, 38, 39) autour d'un axe parallèle à l'axe de rotation des rouleaux presseurs (11, 12, 13, 14), en ce que le premier levier coudé (38, 39) est, au moyen d'un premier organe de réglage (17, 18) agissant approximativement centralement, capable de pivoter autour d'un axe principal (42, 43) parallèle à l'axe du cylindre de gaufrage (15) ou respectivement des rouleaux presseurs (11, 12, 13, 14), pour l'appui des rouleaux presseurs (12, 13) supportés sur la première bascule (12, 13') sur le cylindre de gaufrage (15), et en ce que le deuxième levier coudé (36, 37) est supporté de manière à pouvoir pivoter sur un support (32, 33) capable de tourner autour de l'axe principal (42, 43) et est déplaçable conjointement au support au moyen d'un deuxième organe de réglage (16,19) agissant de façon opposée sur le deuxième levier coudé (36, 37) de la bascule (11', 14').

7. Dispositif suivant l'une des revendications 4 à 6, caractérisé en ce que le deuxième levier coudé (36, 37) est, de manière élastique, maintenu dans une position de repos par rapport au support (32, 33) et en ce que, lorsque le support (32, 33) atteint une position de pivotement qui suffit pour l'application sur le cylindre de gaufrage (15) des rouleaux presseurs (11, 14) supportés sur la deuxième bascule (11', 14') et dans laquelle ce support est en appui contre une butée, le deuxième levier coude peut être, à l'encontre de l'action de ressort, bascule au moyen du deuxième organe de réglage (36, 37) en dehors de sa position de repos, en direction du cylindre de gaufrage (15).

8. Dispositif suivant l'une des revendications 4 à 7, caractérisé en ce que le cylindre de gaufrage (15) est entraîné au moyen d'un organe d'entraînement séparé, réglable, de préférence au moyen d'un moteur à courant continu.

9. Dispositif suivant l'une des revendications 4 à 7, caractérisé en ce que le cylindre de gaufrage (15) est entraîné par l'intermédiaire d'un accouplement patinant à moment de rotation réglable.

10. Dispositif suivant l'une des revendications 8 et 9, caractérisé en ce qu'un rouleau compensateur (21), réglable en fonction de la tension de la bande de matière (1) et situé en aval du cylindre de gaufrage (15) dans le sens de passage, sert au réglage du moment de rotation de l'accouplement patinant ou respectivement de l'organe d'entraînement separé.

11. Dispositif suivant l'une des revendications 4 à 10, caractérisé en ce qu'un dispositif pour maintenir constante la tension de la bande de matière (1) et de la feuille de gaufrage (5) entre des rouleaux de réserve correspondants (2, 6) et le cylindre de gaufrage (15) est prévu.

12. Dispositif suivant la revendication 11, caractérisé en ce que des dispositifs de freinage sur les rouleaux de réserve (2) et/ou des rouleaux de freinage particuliers (7) pour la bande de matière (1) ou la feuille de gaufrage (5) servent à maintenir la tension constante.

FIG. 2

FIG.3